# EUROPÄISCHE PATENTSCHRIFT

(11) **EP 3 075 580 B1**
(45) Veröffentlichungstag und Bekanntmachung des Hinweises auf die Patenterteilung: **18.10.2017**
(21) Anmeldenummer: 16162340.0
(22) Anmeldetag: 24.03.2016
(51) Int. Cl.: B60D 5/00, B61D 17/22, B62D 47/02

(54) **DOPPELBALGANORDNUNG FÜR EINEN ÜBERGANG ZWISCHEN ZWEI GELENKIG MITEINANDER VERBUNDENEN FAHRZEUGTEILEN EINES FAHRZEUGS, FAHRZEUG MIT EINER DOPPELBALGANORDNUNG, VERFAHREN ZUM HERSTELLEN EINER DOPPELBALGANORDNUNG, SOWIE ZUM HERSTELLEN EINES FAHRZEUGS MIT EINER DOPPELBALGANORDNUNG**
DOUBLE BELLOWS ASSEMBLY FOR A TRANSITION BETWEEN TWO VEHICLE SECTIONS WITH A JOINTED CONNECTION OF A VEHICLE, VEHICLE WITH A DOUBLE BELLOWS ASSEMBLY, METHOD FOR PRODUCING A DOUBLE BELLOWS ASSEMBLY, AND FOR PREPARING A VEHICLE COMPRISING A DOUBLE BELLOWS ASSEMBLY
SYSTEME DE DOUBLE SOUFFLET POUR UN PASSAGE ENTRE DEUX PARTIES DE VEHICULES RELIEES DE MANIERE ARTICULEE, VEHICULE COMPRENANT UN SYSTEME DE DOUBLE SOUFFLET, PROCEDE DE FABRICATION D'UN SYSTEME DE DOUBLE SOUFFLET ET DESTINE A FABRIQUER UN VEHICULE AUTOMOBILE DOTE D'UN SYSTEME A DOUBLE SOUFFLET

(30) Priorität: 01.04.2015 DE 102015205965
(43) Veröffentlichungstag der Anmeldung: 05.10.2016
(73) Patentinhaber: Bombardier Transportation GmbH, 10785 Berlin (DE)
(72) Erfinder: Grzesiuk, Tomasz, 1120 Wien (AT); Petto, Michael, 1220 Wien (AT); Singer, Gotthard, 2000 Stockerau (AT)
(74) Vertreter: Patentanwälte Bressel und Partner mbB

(56) Entgegenhaltungen:
- EP-A1- 2 322 364
- EP-A1- 2 468 600
- DE-A1- 3 342 107

## Beschreibung

Die Erfindung betrifft eine Doppelbalganordnung für einen Übergang zwischen zwei gelenkig miteinander verbundenen Fahrzeugteilen eines Fahrzeugs, eine Luftführungsanordnung mit einer derartigen Doppelbalganordnung, ein Fahrzeug mit einer derartigen Doppelbalganordnung, ein Verfahren zum Herstellen einer Doppelbalganordnung für einen Übergang zwischen zwei gelenkig miteinander verbundenen Fahrzeugteilen eines Fahrzeugs und ein Verfahren zum Herstellen eines Fahrzeugs mit einer derartigen Doppelbalganordnung. Bei dem inneren und/oder äußeren Balg kann es sich zum Beispiel um einen Wellenbalg oder um einen Faltenbalg handeln.

Doppelbalganordnungen mit einem inneren Balg und einem äußeren Balg für einen Übergang zwischen zwei gelenkig miteinander verbundenen Fahrzeugen sind allgemein bekannt. Zum Beispiel schreibt EP 2468600 A1 eine solche Doppelbalganordnung.

Es ist ferner bekannt, dass in einem Zwischenraum zwischen dem inneren und dem äußeren Balg ein Luftführungskanal zur Luftführung zwischen den beiden Fahrzeugteilen gebildet wird. EP 2468600 A1 beschreibt z. B. dass der Kanal zur Luftführung zwischen den beiden Fahrzeugteilen auf zwei einander gegenüberliegenden Seiten durch den inneren und den äußeren Balg gebildet wird und ferner durch zusätzliche, zwischen dem äußeren und dem inneren Balg eingesetzte Wandelemente gebildet wird. Die zusätzlichen Wandelemente sind im Übergang sowohl zum äußeren als auch zum inneren Balg im Wesentlichen konturgleich zu dem jeweiligen Balg.

Nachteilig an dem Luftführungskanal der EP2468600 A1 ist ein erhöhter Reinigungsaufwand zum Reinigen des Luftführungskanals, da dieser zumindest am äußeren Balg und am inneren Balg durch Wände gebildet wird, die den für Bälge typischen Verlauf in Längsrichtung der Doppelbalganordnung haben, z. B. in der Art eines Faltenbalges oder eines Wellenbalges. Insbesondere an den Vorwölbungen oder Vorsprüngen vom Kanalinneren nach außen lassen sich die Wände nur mit Spezialwerkzeug und/oder mit großem Zeitaufwand an ihrer Innenseite reinigen. Auch führen Wellen zu einem höheren Luftwiderstand für die Luftströmung durch den Kanal. Alternativ zu der Anordnung im Zwischenraum zwischen dem inneren und dem äußeren Balg könnte der Luftführungskanal in eine innere Verkleidung der Doppelbalganordnung integriert werden, die sich zwischen dem für Personen in dem Übergang zur Verfügung stehenden Raum und dem inneren Balg befindet. Eine solche innere Verkleidung ist zwar nicht zwingend erforderlich, wird aber in vielen Fällen vorgesehen, um zu vermeiden, dass der Raum des Übergangs durch eine Fläche mit Ein- und Ausbuchtungen begrenzt ist. Nachteilig an der Integration des Luftführungskanals in die innere Verkleidung ist aber der zusätzliche Platzbedarf. Um für die Luftströmung innerhalb des Luftführungskanals Platz zu schaffen, muss die Oberfläche der Innenverkleidung in einem größeren Abstand zu dem inneren Balg angeordnet sein. Der in dem Übergang für Personen zu Verfügung stehende Raum, der durch die Oberfläche begrenzt wird, ist somit kleiner.

Möglich ist es auch, den Zwischenraum zwischen dem inneren und dem äußeren Balg ohne zusätzliche Wandelemente für die Luftführung zwischen den beiden durch den Übergang miteinander verbundenen Fahrzeugteilen zu nutzen wie dies z.B. in der DE 44 19 445 A1 beschrieben ist. Dies ermöglicht jedoch keine gezielte Luftführung und erfordert ebenfalls erheblichen Aufwand für die Reinigung.

Es ist eine Aufgabe der vorliegenden Erfindung, eine Doppelbalganordnung für einen Übergang zwischen zwei gelenkig miteinander verbundenen Fahrzeugteilen eines Fahrzeugs, ein Fahrzeug mit einer derartigen Doppelbalganordnung, ein Verfahren zum Herstellen einer Doppelbalganordnung für einen Übergang zwischen zwei gelenkig miteinander verbundenen Fahrzeugteilen eines Fahrzeugs und ein Verfahren zum Herstellen eines Fahrzeugs mit einer derartigen Doppelbalganordnung anzugeben, die eine Reinigung des Luftführungskanals im Bereich des Übergangs zwischen den Fahrzeugteilen mit geringem Aufwand ermöglichen und den Raum, der Personen in dem Übergang zur Verfügung steht, nicht verkleinern.

Gemäß einem Grundgedanken der vorliegenden Erfindung wird in dem Zwischenraum zwischen dem inneren und dem äußeren Balg ein Luftführungskanal angeordnet, der Kanalwände aufweist, welche lediglich stellenweise und somit nicht vollflächig mit dem inneren Balg oder dem äußeren Balg verbunden sind. Diese Kanalwände sind jedoch aus flexiblem Material gefertigt, das es bei Kurvenfahrten des Fahrzeugs erlaubt, den resultierenden Formveränderungen der Bälge entsprechend auch ihre Form zu ändern. Da diese Kanalwände nur stellenweise mit dem äußeren oder dem inneren Balg verbunden sind, bleibt der Luftführungskanal zwar im Wesentlichen an seiner Position. Seine Kanalwände müssen jedoch nicht selbst die Form eines Balges haben. Vielmehr können die einzelnen Kanalwände des Luftführungskanals im Wesentlichen glatte innere, zum Innenraum des Luftführungskanals weisende Oberflächen haben, die frei von Vorsprüngen und Einbuchtungen mit den Abmessungen der Vorsprünge und Einbuchtungen des inneren oder äußeren Balges sind, wenn die Kanalwand ihre größtmögliche Länge in Fahrtrichtung hat. Die größtmögliche Länge wird insbesondere erreicht, wenn sich die betreffende Kanalwand bei einer Kurvenfahrt des Fahrzeugs außen befindet. Die dabei benötigte Ausdehnung kann aber zumindest teilweise nicht nur durch die Flexibilität der Kanalwände, sondern dadurch erreicht werden, dass die Befestigung der Kanalwand an dem äußeren oder inneren Balg flexibel ausgestaltet ist.

In jedem Fall ermöglicht es die Flexibilität der Kanalwand, dass sie bei Kurvenfahrten des Fahrzeugs auf der Innenseite der Kurve eine geringere Längserstreckung als bei Geradeausfahrt hat. Insbesondere bildet die Kanalwand bei der Verkürzung Falten oder Wellen, die jedoch anders als bei einem Balg nicht permanent vorhanden sind. Aus diesem Grund lässt sich die innere Oberfläche der Kanalwand einfacher reinigen als die innere Oberfläche eines Balges. Eine vorteilhafte Eigenschaft der flexiblen Kanalwand ist daher das Fehlen permanenter Wellen oder Falten. Aufgrund ihrer Flexibilität kann die Kanalwand selbst dann, wenn sie Wellen oder Falten bildet, auf einfache Weise gereinigt werden, da die Wellen oder Falten bei Bedarf mit einem Reinigungsgerät oder auf andere Weise (z. B. durch Einblasen von Luft in den Luftführungskanal) geglättet werden können. Auch ist der Luftströmungswiderstand aufgrund des Fehlens permanenter Wellen und Falten geringer.

Insbesondere sind die flexiblen Kanalwände aus einem Material in der Form eines Tuchs gefertigt, d. h. das Material kann z. B. auf einer ebenen Fläche ausgelegt werden und weist eine in etwa konstante Dicke auf, während sie die ebene Fläche abdeckt. Z. B. kann das Material ein Gewebe sein. Dies ist jedoch nicht zwingend erforderlich. Ein anderes Ausführungsbeispiel ist ein flaches elastisches Material in der Form eines Tuchs. Allgemein bevorzugt wird daher, dass die innere Kanalwand und/oder die äußere Kanalwand des Luftführungskanals aus einem elastischen Material und/oder aus einem Gewebe besteht. Z. B. kann das Gewebe aus einem elastischen Faden oder verschiedenen elastischen Fäden oder unter Verwendung zumindest eines elastischen Fadens gewebt sein. Es können jedoch alternativ sämtliche Fäden des Gewebes zwar flexibel, jedoch nicht elastisch sein. Ferner ist es möglich, ein Gewebe zusätzlich mit einer Schicht zu versehen, d. h. insbesondere an der Oberfläche zu beschichten. Dadurch kann das Gewebe insbesondere luftdicht ausgestaltet werden. Als elastische Materialien, aus denen zumindest ein Faden des Gewebes besteht, mit dem das Gewebe beschichtet ist oder aus dem ein homogenes elastische tuchförmiges Material gebildet werden kann, sind z. B. Kautschuk, beispielsweise EPDM (Ethylen-Propylen-Dien-Kautschuk) oder Chloropren-Kautschuk geeignet. Auch andere elastische Materialien wie z. B. Silikon kommen in Frage.

Insbesondere wird folgendes vorgeschlagen: Eine Doppelbalganordnung für einen Übergang zwischen zwei gelenkig miteinander verbundenen Fahrzeugteilen eines Fahrzeugs, wobei die Doppelbalganordnung einen inneren und einen äußeren Balg aufweist, die in einer Richtung quer zu einer Längsrichtung des Übergangs einen Zwischenraum zwischen einander aufweisen, wobei der Übergang in einem eingebauten Zustand der Doppelbalganordnung Personen erlaubt, durch den Übergang in der Längsrichtung von einem der Fahrzeugteile in einen anderen der Fahrzeugteile zu gelangen, wobei in dem Zwischenraum ein Luftführungskanal angeordnet ist, der Kanalwände aufweist, welche einen für strömende Luft zur Verfügung stehenden Strömungsraum des Luftführungskanals begrenzen, wobei eine innere Kanalwand entlang dem inneren Balg verläuft und eine äußere Kanalwand entlang dem äußeren Balg verläuft, wobei die innere Kanalwand und die äußere Kanalwand aus flexiblem Material bestehen, wobei die innere Kanalwand an in der Längsrichtung des Übergangs zueinander beabstandeten Befestigungsbereichen an dem inneren Balg befestigt ist und die innere Kanalwand in der Längsrichtung zwischen den Befestigungsbereichen nicht an dem inneren Balg befestigt ist und wobei die äußere Kanalwand an in der Längsrichtung des Übergangs zueinander beabstandeten Befestigungsbereichen an dem äußeren Balg befestigt ist und die äußere Kanalwand in der Längsrichtung zwischen den Befestigungsbereichen nicht an dem äußeren Balg befestigt ist.

Außerdem wird eine Luftführungsanordnung mit einer Doppelbalganordnung in einer der Ausgestaltungen vorgeschlagen, die in dieser Beschreibung und den beigefügten Figuren offenbart sind. Der Luftführungskanal ist mit einem Lufteinlass zum Einlassen von Luft verbunden, wobei sich der Lufteinlass, betrachtet in der Längsrichtung des Übergangs, an einem Ende der Doppelbalganordnung befindet.

Ferner wird ein Fahrzeug mit einer Doppelbalganordnung in einer der Ausgestaltungen vorgeschlagen, die in dieser Beschreibung und den beigefügten Figuren offenbart sind. Zwei Fahrzeugteile des Fahrzeugs weisen einen Übergang auf, der an mehreren Seiten des Übergangs durch die Doppelbalganordnung begrenzt ist.

Auch wird vorgeschlagen: Ein Verfahren zum Herstellen einer Doppelbalganordnung für einen Übergang zwischen zwei gelenkig miteinander verbundenen Fahrzeugteilen eines Fahrzeugs, wobei als Teile der Doppelbalganordnung ein innerer und ein äußerer Balg bereitgestellt werden, so dass der innere und der äußere Balg in einer Richtung quer zu einer Längsrichtung des Übergangs einen Zwischenraum zwischen einander aufweisen, sodass der Übergang in einem eingebauten Zustand Personen erlaubt, durch den Übergang in der Längsrichtung von einem der Fahrzeugteile in einen anderen der Fahrzeugteile zu gelangen, wobei in dem Zwischenraum ein Luftführungskanal angeordnet wird, der Kanalwände aufweist, welche einen für strömende Luft zur Verfügung stehenden Strömungsraum des Luftführungskanals begrenzen, wobei eine innere Kanalwand entlang dem inneren Balg verläuft und eine äußere Kanalwand entlang dem äußeren Balg verläuft, wobei die innere Kanalwand und die äußere Kanalwand aus flexiblem Material bestehen, wobei die innere Kanalwand an in der Längsrichtung des Übergangs zueinander beabstandeten Befestigungsbereichen an dem inneren Balg befestigt wird und die innere Kanalwand in der Längsrichtung zwischen den Befestigungsbereichen nicht an dem inneren Balg befestigt wird und wobei die äußere Kanalwand an in der Längsrichtung des Übergangs zueinander beabstandeten Befestigungsbereichen an dem äußeren Balg befestigt wird und die äußere Kanalwand in der Längsrichtung zwischen den Befestigungsbereichen nicht an dem äußeren Balg befestigt wird.

Ausgestaltungen des Verfahrens ergeben sich aus Ausgestaltungen der Doppelbalganordnung, die in dieser Beschreibung und den beigefügten Figuren offenbart sind. Z. B. kann der Luftführungskanal zur Herstellung einer Luftführungsanordnung für das Fahrzeug mit einem Lufteinlass zum Einlassen von Luft verbunden werden, wobei der Lufteinlass, betrachtet in der Längsrichtung des Übergangs, an einem Ende der Doppelbalganordnung angeordnet wird.

Zur Erfindung gehört auch ein Verfahren zum Herstellen eines Fahrzeugs mit einer Doppelbalganordnung, wobei die Doppelbalganordnung in einer der Ausgestaltungen, die in dieser Beschreibung und den beigefügten Figuren offenbart sind, hergestellt wird und wobei ein Übergang zwischen zwei gelenkig miteinander verbundenen Fahrzeugteilen hergestellt wird, der an mehreren Seiten des Übergangs durch die Doppelbalganordnung begrenzt wird.

Indem die innere Kanalwand und die äußere Kanalwand lediglich an in der Längsrichtung des Übergangs zueinander beanstandeten Befestigungsbereichen an dem äußeren oder an dem inneren Balg befestigt sind/werden, kann sich das Material der Kanalwände aufgrund seiner Flexibilität zwischen den Befestigungsbereichen verformen, wenn das Fahrzeug in eine Kurve einfährt und wieder aus der Kurve ausfährt. Die Kombination der lediglich lokalen Befestigung der Kanalwände an dem jeweiligen Balg mit der flexiblen Ausgestaltung der Kanalwände führt somit zu der erforderlichen Anpassung der Abmessungen des Luftführungskanals an die veränderliche Form des Übergangs bei Kurvenfahrten und auch bei sonstigen Ereignissen, die die Form der Bälge verändern, wie z. B. Erschütterungen, Demontage und Montage der Doppelbalganordnung.

Insbesondere kann der Luftführungskanal in dem Zwischenraum zwischen dem inneren und dem äußeren Balg von unten nach oben verlaufen. Luft kann daher während des Betriebes des Luftführungskanals von oben nach unten oder von unten nach oben durch den Luftführungskanal strömen. Z. B. ist der Luftführungskanal als sogenannter Stichkanal eines Luftführungssystems des Fahrzeugs ausgeführt, der von einem weiteren Luftführungskanal abzweigt. Der weitere Luftführungskanal ist z. B. ein unterer Luftführungskanal, der im unteren Bereich des Übergangs zwischen dem inneren und dem äußeren Balg verläuft. Der Stichkanal zweigt in diesem Fall von dem unteren Luftführungskanal ab und führt nach oben oder führt von oben in den unteren Luftführungskanal und mündet in diesen. Insbesondere können zwei der unteren Luftführungskanäle vorhanden sein, die von jeweils einem der über den Übergang verbundenen Fahrzeugteile zu dem nach oben führenden Luftführungskanal in den Zwischenraum führen. Auf diese Weise ist es insbesondere möglich, aus dem Bodenbereich der miteinander über den Übergang verbundenen Fahrzeugteile Luft abzuführen und über den nach oben führenden Luftführungskanal in zumindest einen oberen Luftführungskanal einzuleiten, durch den während des Betriebes des Luftführungssystems Luft z. B. zur Aufbereitung und insbesondere zur Wiedereinleitung in zumindest einen der Fahrzeugteile geleitet wird. Die Aufbereitung besteht z. B. in einer Erwärmung, Abkühlung, Befeuchtung und/oder Entfeuchtung der Luft.

Insbesondere kann alternativ oder zusätzlich zu dem von unten nach oben oder von oben nach unten führenden Luftführungskanal zumindest ein unterer und/oder ein oberer Luftführungskanal, der Luft während des Betriebes z. B. in der Längsrichtung des Übergangs führt, eine innere und/oder äußere Kanalwand aus flexiblem Material aufweisen, die wie bereits beschrieben lediglich stellenweise an dem inneren Balg oder dem äußeren Balg befestigt ist.

Der zumindest eine Luftführungskanal im Zwischenraum zwischen dem inneren und dem äußeren Balg hat den Vorteil, dass eine gezielte Luftführung möglich ist, z. B. von einem Lufteinlass oder zu einem Luftauslass im Bodenbereich des angrenzenden Fahrzeugteils. Bei allen Ausgestaltungen eines Luftführungssystems mit einem solchen Luftführungskanal ist die Reinigung in dem Zwischenraum zwischen dem inneren und dem äußeren Balg vereinfacht und ist es daher einfacher, die Luft in dem gesamten Luftführungssystem von Verunreinigungen frei zu halten.

Bevorzugt wird, dass die innere Kanalwand und/oder die äußere Kanalwand zumindest in einem der Befestigungsbereiche und vorzugsweise in allen Befestigungsbereichen zu der jeweiligen Kanalwand lösbar über einen Befestigungsclip oder eine Verschraubung mit dem jeweils zugeordneten inneren Balg oder äußeren Balg verbunden ist. Z. B kann die lösbare Befestigung flexibel sein, so dass sich die Befestigungsstelle der Befestigung an der Kanalwand und die Befestigungsstelle derselben Befestigung an dem Balg bezogen auf die Längsrichtung des Übergangs relativ zueinander bewegen können, z. B. bei Kurvenfahrten des Fahrzeugs.

Ausführungsbeispiele der Erfindung werden nun unter Bezugnahme auf die beigefügte Zeichnung beschrieben. Die einzelnen Figuren der Zeichnung zeigen:
- Fig. 1: schematisch eine perspektivische Darstellung eines Schienenfahrzeug-Wagenkastens mit einem Übergang, der zu einem im Vordergrund liegenden, nicht dargestellten weiteren Wagenkasten führt,
- Fig. 2: schematisch einen Querschnitt durch den in Fig. 1 dargestellten Übergang, wobei der innere Balg, der äußere Balg und Luftführungskanäle in dem Zwischenraum zwischen dem inneren und dem äußeren Balg erkennbar sind,
- Fig. 3: eine isometrische dreidimensionale Darstellung des Übergangs aus Fig. 1 und Fig. 2 mit den lediglich schematisch dargestellten Bälgen und den Luftführungskanälen im Übergang,
- Fig. 4: einen horizontalen Querschnitt durch den in Fig. 1 bis Fig. 3 dargestellten Übergang entlang der Linie IV-IV in Fig. 2, wobei die Bälge lediglich schematisch, z. B. ohne eine Wellenform oder Faltenform dargestellt sind und wobei Befestigungsstellen eines Luftführungskanals in dem Zwischenraum zwischen dem inneren Balg und dem äußeren Balg lediglich im rechten Figurenteil dargestellt sind,
- Fig. 5: schematisch zwei verschiedene Arten von Befestigungen einer Kanalwand eines Luftführungskanals an einem Balg, wobei der Balg schematisch ohne Wellen oder Falten dargestellt ist,
- Fig. 6: schematisch einen Ausschnitt des horizontalen Querschnitts aus Fig. 4, wobei der innere und der äußere Balg Wellenbälge sind, und
- Fig. 7: die Anordnung aus Fig. 6, wobei jedoch das Fahrzeug in einer Kurve fährt, so dass die auf der Kurveninnenseite liegende Anordnung in der Längsrichtung (horizontale Richtung in der Figur) gegenüber dem in Fig. 6 gezeigten Zustand verkürzt ist und die Kanalwände des Luftführungskanals daher verformt sind.

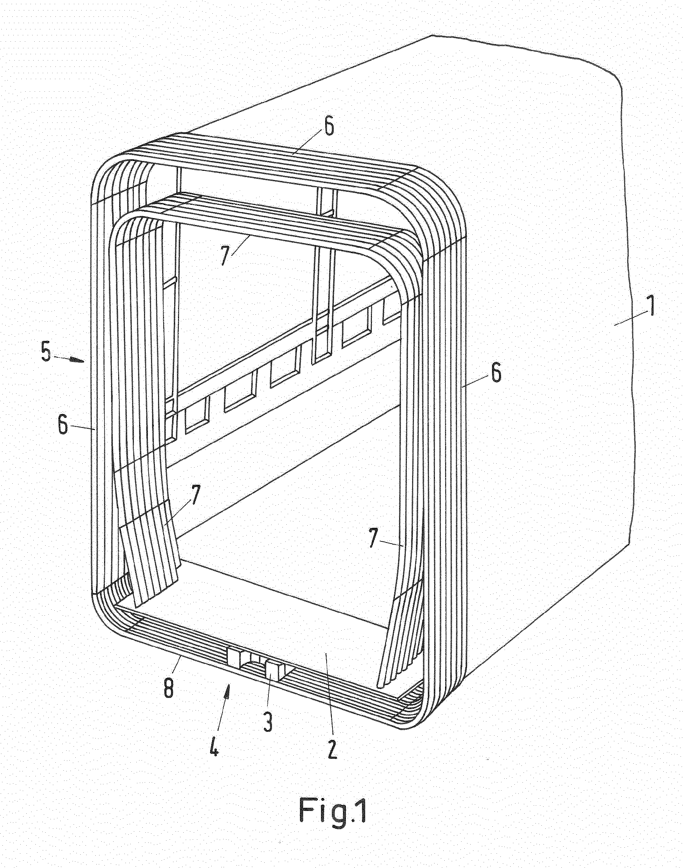

In Fig. 1 ist der Rohbau eines Schienenfahrzeugs-Wagenkastens 1 dargestellt, wobei insbesondere weitere, nicht dargestellte Teile des Rohbaus im Inneren des Wagenkastens 1 vorhanden sein können. Im Bildvordergrund erkennt man einen Zwischenboden 2 innerhalb des Übergangs 4, wobei unterhalb des Zwischenbodens Teile eines Gelenks 3 dargestellt sind, über das der Wagenkasten 1 gelenkig mit dem weiteren, nicht dargestellten Wagenkasten verbunden werden kann.

Der Übergang 4 ist durch einen Übergangsschutz 5 geschützt, so dass Personen durch den Übergang 4 hindurch in den Wagenkasten 1 gelangen können oder ihn verlassen können. Der Übergangschutz 5 weist eine äußeren Balg 6 und einen inneren Balg 7 auf. Der innere Balg 7 endet unten auf dem Zwischenboden, während der äußere Balg 6 in den unteren Teil 8 des äußeren Balgs übergeht. Dieser untere Teil 8 befindet sich unterhalb des Zwischenbodens 2.

Der äußere Balg 6 und der innere Balg 7 können zum Beispiel Wellenbälge sein. Z. B. bestehen die Wellen zumindest eines der Bälge aus einer Materialbahn, welche eine Trägerschicht mit beidseitiger äußerer Polymerbeschichtung hat. Alternativ oder zusätzlich ist zumindest einer der Wellenbälge z. B. unter Verwendung eines Silikonmaterials gefertigt.

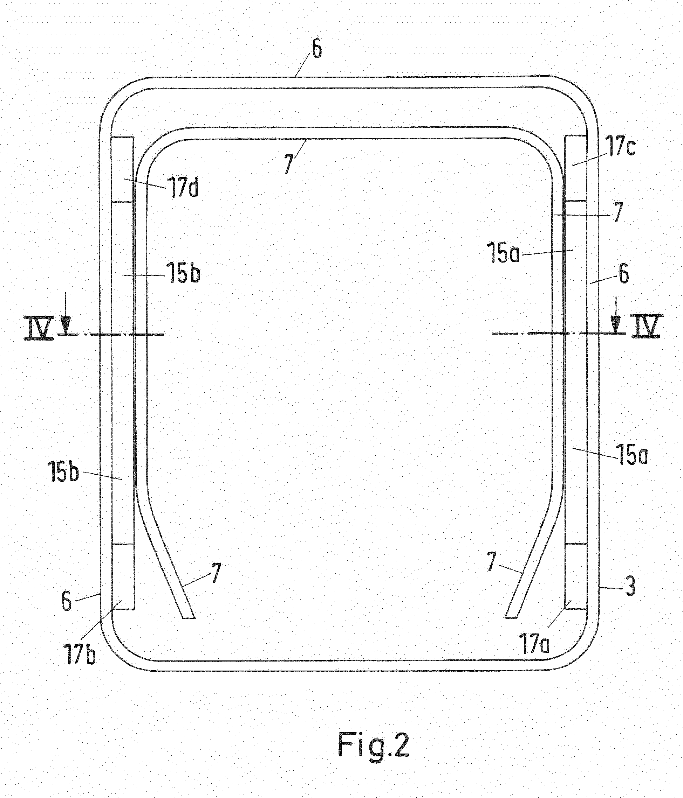

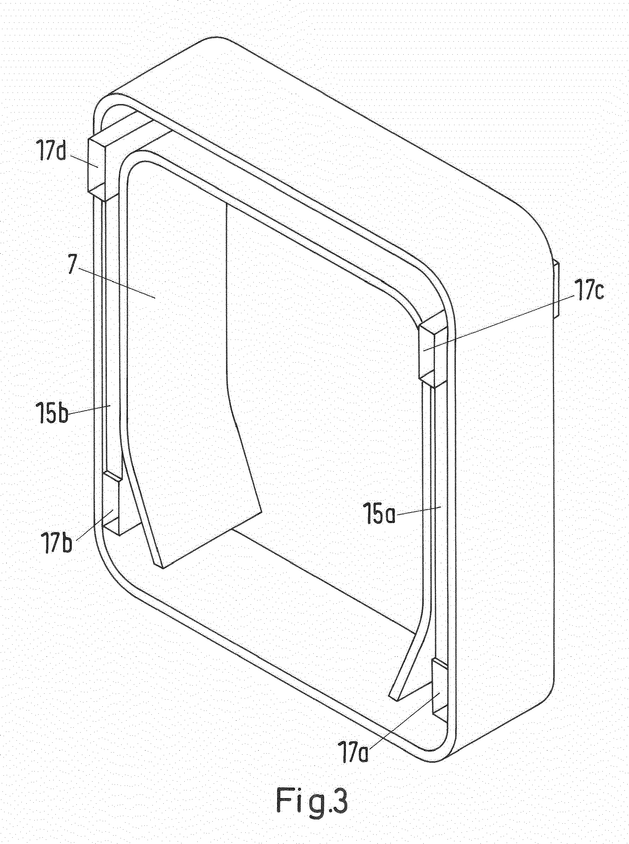

In dem in Fig. 1 dargestellten Übergang sind keine Luftführungskanäle dargestellt. Solche Luftführungskanäle können jedoch, wie in Fig. 2 und Fig. 3 dargestellt ist, in dem Zwischenraum zwischen dem äußeren Balg 6 und dem inneren Balg 7 angeordnet sein/werden.

In dem in Fig. 2 gezeigten Querschnitt sind mehrere Luftführungskanäle 15, 17 erkennbar. Ein erster Luftführungskanal 15 a ist rechts in der Figur dargestellt. Er führt von unten nach oben und verbindet zwei in horizontaler Richtung, d. h. senkrecht zur Figurenebene verlaufende zweite Luftführungskanäle 17a, 17c. Auf der linken Seite der Figur ist ein weiterer erster Luftführungskanal 15b erkennbar, der ebenfalls von unten nach oben führt. Er verbindet ebenfalls zwei zweite horizontal verlaufende Luftführungskanäle 17b, 17d. Diese Luftführungskanäle 15, 17 sind auch aus Fig. 3 erkennbar.

Z. B. können die unteren horizontal verlaufenden zweiten Luftführungskanäle 17a, 17b jeweils an einen Lufteinlass in dem benachbarten Wagenkasten angeschlossen sein, so dass aus dem Innenraum des Wagenkastens während des Betriebes des Luftführungssystems Luft durch die Lufteinlässe in den zweiten Luftführungskanal 17a, 17b einströmt. Diese Luft strömt durch den unteren zweiten Luftführungskanal 17a, 17b jeweils in dem daran angeschlossenen ersten Luftführungskanal 15 a, 15 b nach oben und von dort in den oberen zweiten Luftführungskanal 17c, 17d, der wiederum an eine nicht dargestellte Luftaufbereitungsanlage angeschlossen sein kann.

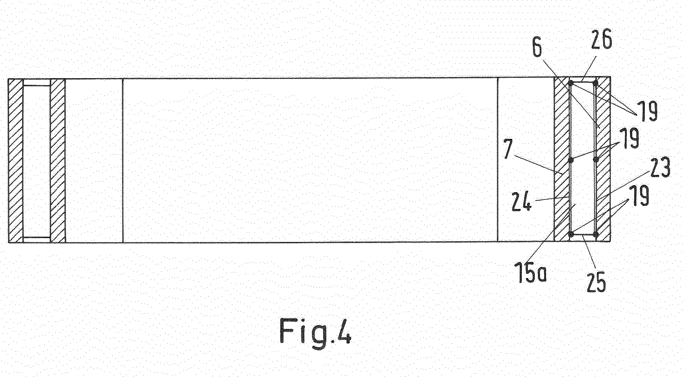

Die in Fig. 2 und Fig. 3 dargestellten Luftführungskanäle 15, 17 sind jeweils lediglich stellenweise mit dem äußeren Balg 6 und dem inneren Balg 7 verbunden. Für den rechts in Fig. 2 und Fig. 3 dargestellten ersten Luftführungskanal 15a sind sechs Verbindungsstellen 19 des Luftführungskanals 15a zu dem äußeren Balg 6 und dem inneren Balg 7 als Punkte dargestellt. Der Luftführungskanal 15a weist eine innere Kanalwand 24 und eine äußere Kanalwand 23 auf, sowie zwei Stirnwände 25, 26. Die äußere Kanalwand 23 ist an drei Befestigungsstellen 19 über jeweils eine Verbindung mit dem äußeren Balg 6 verbunden. Die innere Kanalwand 24 ist an drei Befestigungsstellen 19 jeweils über eine Verbindung mit dem inneren Balg 7 verbunden. In der Längsrichtung des Übergangs, die in Fig. 4 in vertikaler Richtung verläuft, sind die Befestigungsstellen 19 voneinander beabstandet. Zwischen den Befestigungsstellen 19 befindet sich keine Verbindung der jeweiligen Kanalwand 23, 24 mit dem benachbarten Balg 6, 7.

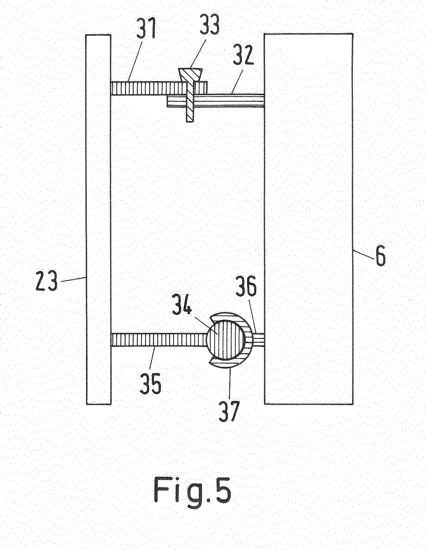

Anhand jeweils eines Längsabschnitts der äußeren Kanalwand 23 aus Fig. 4 und des äußeren Balges 6 werden nun anhand von Fig. 5 Beispiele für Verbindungen zwischen einer Kanalwand aus flexiblem Material und einem Balg beschrieben. Im oberen Teil der Fig. 5 ist eine erste Ausführungsform einer Verbindung beschrieben, die z. B. eine der Verbindungen 19 aus Fig. 4 sein kann. Mit der Kanalwand 23 ist ein erstes Verbindungselement 31 verbunden, dass sich von der Kanalwand 23 in Richtung des Balges 6 erstreckt. Mit dem Balg 6 ist ein zweites Verbindungselement 32 verbunden, dass sich ausgehend von dem Balg 6 in Richtung der Kanalwand 23 erstreckt. Das erste Verbindungselement 31 und das zweite Verbindungselement 32 überlappen einander und sind mittels einer Schraube 33 miteinander verschraubt. Somit ist die Verbindung lösbar, indem die Schraube mittels eines Schraubendrehers gelöst wird.

Im unteren Teil der Fig. 5 ist ein zweites Ausführungsbeispiel schematisch dargestellt. Mit der Kanalwand 23 ist ein erstes Verbindungselement 35 verbunden, das sich von der Kanalwand 23 in Richtung des Balges 6 erstreckt. Mit dem Balg 6 ist ein zweites Verbindungselement 36 verbunden, das sich von dem Balg 6 in Richtung der Kanalwand 23 erstreckt. An dem freien Ende des ersten Verbindungselements 35 ist das erste Verbindungselement 35 verbreitert und weist in dem dargestellten Ausführungsbeispiel einen kreisförmigen Querschnitt auf. Z. B. befindet sich an dem freien Ende eine Kugel 34. An dem freien Ende des zweiten Verbindungselements 36 befindet sich eine Aufnahmevorrichtung 37 zur Aufnahme des verbreiterten freien Endes des ersten Verbindungselements 35. In dem Ausführungsbeispiel ist die Aufnahme kugelförmig ausgespart und auf die Abmessungen der Kugel 34 abgestimmt, so dass diese in die Aufnahme 37 eingeclipt werden kann. In dem dargestellten eingeclipten Zustand einer formschlüssigen Verbindung setzt die Aufnahme 37 einem unbeabsichtigten Austreten der Kugel 34 einen Widerstand entgegen. Diese Clipverbindung ist lediglich ein Ausführungsbeispiel. Eine Clipverbindung kann auch auf andere Weise realisiert werden.

Die Verbindungselemente 31, 35 können z. B stoffschlüssig durch Kleben oder Schweißen mit der Kanalwand 23 verbunden sein/werden auch die zweiten Verbindungselemente 32, 36 können z. B. stoffschlüssig durch Schweißen oder Kleben mit dem Balg 6 verbunden sein. Es ist jedoch auch eine formschlüssige Verbindung denkbar, z. B. durch Vernähen eines verbreiterten Endes des Verbindungselements mit der Kanalwand bzw. dem Balg. Auch andere Arten von Verbindungen, z. B. wie Klettverschlüsse sind möglich, um die Kanalwand lediglich stellenweise an dem benachbarten Balg zu befestigen.

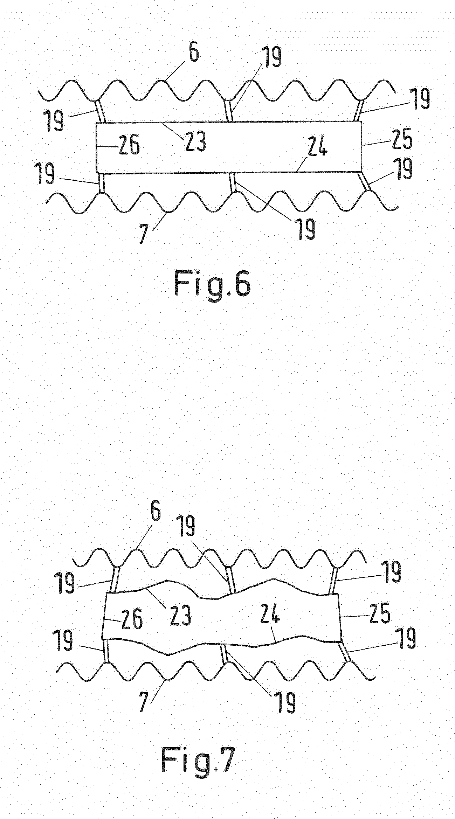

Anhand der schematischen Darstellungen in Fig. 6 und Fig. 7 wird nun beschrieben, wie es das flexible Material der Kanalwände und die lediglich stellenweise Befestigung der Kanalwände an den Bälgen insbesondere Kurvenfahrten des Fahrzeugs ermöglicht, während denen die Bälge in Längsrichtung verkürzt sind. Fig. 6 zeigt den Zustand bei Geradeausfahrt des Fahrzeugs. Die in dem Ausführungsbeispiel als Wellenbälge 6, 7 ausgeführten Bälge sind in dem dargestellten Querschnitt jeweils an drei Befestigungsstellen 19 mit der benachbarten Kanalwand 23, 24 verbunden. Vorzugsweise sind die Verbindungen flexibel, so dass sich die in Längsrichtung verlaufenden Kanalwände 23, 24 an den Befestigungsstellen 19 relativ zu dem benachbarten Balg 6, 7 bewegen können.

Der in Fig. 7 dargestellte Zustand der Anordnung wird erreicht, wenn das Fahrzeug in eine Kurve fährt. Dabei liegt die Anordnung auf der Innenseite der Kurve (d. h. sie verkürzt sich in der Längsrichtung (Horizontalrichtung in Fig. 6 und Fig. 7) des Übergangs. Da es sich bei dem oben in Fig. 6 und Fig. 7 dargestellten Balg 6 um den äußeren Balg handelt, ist dieser in Längsrichtung noch stärker verkürzt als der innere Balg 7. Durch die Verkürzung der Bälge 6, 7 verkürzt sich auch die in gerader Längsrichtung zu bestimmende Länge der Kanalwände 23, 24. Aufgrund ihrer Flexibilität bilden sie Falten und/oder Wellen. Eine Luftströmung innerhalb des Luftführungskanals ist jedoch immer noch möglich. Insbesondere wenn der Luftdruck innerhalb des Luftführungskanals größer als außerhalb in dem Zwischenraum zwischen den Bälgen 6, 7 ist, werden sich die einander gegenüber liegenden inneren und äußeren Kanalwände 23, 24 aufgrund des höheren Innendrucks anders als Fig. 7 darstellt jeweils in Richtung des benachbarten Balges 6, 7 bewegen und keine in das Innere des Luftführungskanals ragenden Wellen oder Falten bilden. Vielmehr wird der Querschnitt des Luftführungskanals jedenfalls zwischen benachbarten Befestigungen in der Art eines aufgeblasenen Luftballons aufgebläht.

Die in Fig. 4, Fig. 6 und Fig. 7 dargestellte Anzahl von sechs Befestigungsstellen 19 innerhalb einer Querschnittsfläche ist lediglich ein Beispiel. Insbesondere kann die Anzahl der Befestigungsstellen und somit ihr Abstand je nach Art der Befestigung und Länge des Luftführungskanals in Längsrichtung des Überganges variieren. Es ist auch nicht erforderlich, dass in der Längsrichtung nächst benachbarte Befestigungsstellen innerhalb einer Querschnittsfläche liegen, die senkrecht zur Luftströmungsrichtung des Luftführungskanals verläuft oder die in horizontaler Richtung und damit in Längsrichtung des Übergangs verläuft, je nach Ausrichtung des Luftführungskanals. Auch für die Befestigung senkrecht zur Längsrichtung, d. h. in vertikaler Richtung des Fahrzeugs und in horizontaler Richtung des Fahrzeugs senkrecht zur Längsrichtung des Übergangs, gibt es verschiedene Möglichkeiten der Befestigung des Luftführungskanals an den Bälgen. In dieser Richtung kann der jeweilige Luftführungskanal entweder durchgehend oder abschnittsweise durchgehend an dem Balg befestigt sein oder auch in dieser Richtung lediglich stellenweise, d. h. über zueinander beabstandete Verbindungen mit dem benachbarten Balg verbunden sein, die Befestigung mit dem benachbarten Balg ist vorzugsweise dort an dem jeweiligen Balg realisiert, wo sich eine Vorwölbung oder ein sonstiger Vorsprung Richtung Kanalwand erstreckt, d. h. in Bereichen des Balges, die der Kanalwand am nächsten liegen.

Insgesamt betrachtet, hat die Anordnung des Luftführungskanals im Zwischenraum zwischen dem inneren und dem äußeren Balg den Vorteil, dass für den Luftführungskanal auf der Innenseite des inneren Balges kein Platz benötigt wird, z. B. innerhalb der Innenverkleidung des inneren Balges. Dennoch ist der Luftführungskanal aufgrund seiner flexiblen Kanalwände und lediglich stellenweisen Befestigung an den Bälgen zu Formveränderungen z. B. bei Kurvenfahrten fähig und ist außerdem auf einfache Weise zu reinigen, da die Kanalwände keine permanenten Falten oder Wellen bilden. Die Befestigung mit dem benachbarten Balg ist vorzugsweise dort an dem jeweiligen Balg realisiert, wo sich eine Vorwölbung oder ein sonstiger Vorsprung Richtung Kanalwand erstreckt, d. h. in Bereichen des Balges, die der Kanalwand am nächsten liegen.

## Patentansprüche

1. Doppelbalganordnung für einen Übergang (4) zwischen zwei gelenkig miteinander verbundenen Fahrzeugteilen eines Fahrzeugs, wobei die Doppelbalganordnung einen inneren (7) und einen äußeren (6) Balg aufweist, die in einer Richtung quer zu einer Längsrichtung des Übergangs (4) einen Zwischenraum zwischen einander aufweisen, wobei der Übergang (4) in einem eingebauten Zustand Personen erlaubt, durch den Übergang (4) in der Längsrichtung von einem der Fahrzeugteile (1) in einen anderen der Fahrzeugteile zu gelangen,
wobei in dem Zwischenraum ein Luftführungskanal (15, 17) angeordnet ist, der Kanalwände (23, 24, 25, 26) aufweist, welche einen für strömende Luft zur Verfügung stehenden Strömungsraum des Luftführungskanals (15, 17) begrenzen, **dadurch gekennzeichnet, dass**
eine innere Kanalwand (24) entlang dem inneren Balg (7) verläuft und eine äußere Kanalwand (23) entlang dem äußeren Balg (6) verläuft,
wobei die innere Kanalwand (24) und die äußere Kanalwand (23) aus flexiblem Material bestehen,
wobei die innere Kanalwand (24) an in der Längsrichtung des Übergangs (4) zueinander beabstandeten Befestigungsbereichen (19) an dem inneren Balg (7) befestigt ist und die innere Kanalwand (24) in der Längsrichtung zwischen den Befestigungsbereichen (19) nicht an dem inneren Balg (7) befestigt ist und wobei die äußere Kanalwand (23) an in der Längsrichtung des Übergangs (4) zueinander beabstandeten Befestigungsbereichen (19) an dem äußeren Balg (6) befestigt ist und die äußere Kanalwand (23) in der Längsrichtung zwischen den Befestigungsbereichen (19) nicht an dem äußeren Balg (6) befestigt ist.

2. Doppelbalganordnung nach Anspruch 1, wobei der Luftführungskanal (15) in dem Zwischenraum von unten nach oben verläuft.

3. Doppelbalganordnung nach Anspruch 1 oder 2, wobei die innere Kanalwand (24) und/oder die äußere Kanalwand (23) in zumindest einem der Befestigungsbereiche (19) lösbar über einen Befestigungsclip (34, 37) oder eine Verschraubung (33) mit dem jeweils zugeordneten inneren Balg (7) oder äußeren Balg (6) verbunden ist.

4. Doppelbalganordnung nach einem der Ansprüche 1 bis 3, wobei die innere Kanalwand (24) und/oder die äußere Kanalwand (23) aus einem elastischen Material und/oder aus einem Gewebe besteht.

5. Luftführungsanordnung mit einer Doppelbalganordnung nach einem der vorhergehenden Ansprüche, wobei der Luftführungskanal (17) mit einem Lufteinlass zum Einlassen von Luft verbunden ist und wobei sich der Lufteinlass, betrachtet in der Längsrichtung, an einem Ende der Doppelbalganordnung befindet.

6. Fahrzeug mit einer Doppelbalganordnung nach einem der Ansprüche 1 bis 4, wobei die zwei Fahrzeugteile (1) einen Übergang (4) aufweisen, der an mehreren Seiten des Übergangs (4) durch die Doppelbalganordnung begrenzt ist.

7. Verfahren zum Herstellen einer Doppelbalganordnung für einen Übergang (4) zwischen zwei gelenkig miteinander verbundenen Fahrzeugteilen (1) eines Fahrzeugs, wobei als Teile der Doppelbalganordnung ein innerer (7) und ein äußerer (6) Balg bereitgestellt werden, so dass der innere (7) und der äußere (6) Balg in einer Richtung quer zu einer Längsrichtung des Übergangs (4) einen Zwischenraum zwischen einander aufweisen, sodass der Übergang (4) in einem eingebauten Zustand Personen erlaubt, durch den Übergang (4) in der Längsrichtung von einem der Fahrzeugteile (1) in einen anderen der Fahrzeugteile zu gelangen,
wobei in dem Zwischenraum ein Luftführungskanal (15, 17) angeordnet wird, der Kanalwände (23, 24, 25, 26) aufweist, welche einen für strömende Luft zur Verfügung stehenden Strömungsraum des Luftführungskanals (15, 17) begrenzen, **dadurch gekennzeichnet, dass**
eine innere Kanalwand (24) entlang dem inneren Balg (7) verläuft und eine äußere Kanalwand (23) entlang dem äußeren Balg (6) verläuft,
wobei die innere Kanalwand (24) und die äußere Kanalwand (23) aus flexiblem Material bestehen,
wobei die innere Kanalwand (24) an in der Längsrichtung des Übergangs (4) zueinander beabstandeten Befestigungsbereichen (19) an dem inneren Balg (7) befestigt wird und die innere Kanalwand (24) in der Längsrichtung zwischen den Befestigungsbereichen (19) nicht an dem inneren Balg (7) befestigt wird und wobei die äußere Kanalwand (23) an in der Längsrichtung des Übergangs (4) zueinander beabstandeten Befestigungsbereichen (19) an dem äußeren Balg (6) befestigt wird und die äußere Kanalwand (23) in der Längsrichtung zwischen den Befestigungsbereichen (19) nicht an dem äußeren Balg (6) befestigt wird.

8. Verfahren zum Herstellen einer Doppelbalganordnung nach dem vorhergehenden Anspruch, wobei der Luftführungskanal (17) mit einem Lufteinlass zum Einlassen von Luft verbunden wird und wobei der Lufteinlass, betrachtet in der Längsrichtung, an einem Ende der Doppelbalganordnung angeordnet wird.

9. Verfahren zum Herstellen eines Fahrzeugs mit einer Doppelbalganordnung, wobei die Doppelbalganordnung nach Anspruch 7 oder 8 hergestellt wird und wobei ein Übergang (4) zwischen zwei gelenkig miteinander verbundenen Fahrzeugteilen (1) hergestellt wird, der an mehreren Seiten des Übergangs (4) durch die Doppelbalganordnung begrenzt wird.

## Claims

1. A double bellows assembly for a transition (4) between two vehicle sections of a vehicle, which are connected to each other by means of an articulated connection, wherein the double bellows assembly comprises an inner bellows (7) and an outer bellows (6), which comprise a gap therebetween in a direction transverse to a longitudinal direction of the transition (4), wherein the transition (4), in an installed state, allows people to pass through the transition (4) in the longitudinal direction from one of the vehicle sections (1) into another of the vehicle sections,
wherein an air-guiding channel (15, 17) is arranged in the gap and comprises channel walls (23, 24, 25, 26) which delimit a flow space of the air-guiding channel (15, 17) wherein the flow space is available for flowing air, **characterised in that** an inner channel wall (24) runs along the inner bellows (7) and an outer channel wall (23) runs along the outer bellows (6),
wherein the inner channel wall (24) and the outer channel wall (23) consist of flexible material, wherein the inner channel wall (24) is fastened at fastening regions (19) at the inner bellows (7), the fastening regions are distanced from one another in the longitudinal direction of the transition (4), and the inner channel wall (24) is not fastened to the inner bellows (7) in the longitudinal direction between the fastening regions (19), and wherein the outer channel wall (23) is fastened at fastening regions (19) at the outer bellows (6), the fastening regions (19) are distanced from one another in the longitudinal direction of the transition (4), and the outer channel wall (23) is not fastened at the outer bellows (6) in the longitudinal direction between the fastening regions (19).

2. The double bellows assembly according to claim 1, wherein the air-guiding channel (15) runs in the gap from bottom to top.

3. The double bellows assembly according to claim 1 or 2, wherein the inner channel wall (24) and/or the outer channel wall (23) is releasably connected in at least one of the fastening regions (19) via a fastening clip (34, 37) or a screw connection (33) to the respectively assigned inner bellows (7) or outer bellows (6).

4. The double bellows assembly according to any one of claims 1 to 3, wherein the inner channel wall (24) and/or the outer channel wall (23) consists of an elastic material and/or of a fabric.

5. An air-guiding assembly comprising a double-bellows assembly according to any one of the preceding claims, wherein the air-guiding channel (17) is connected to an air inlet for admitting air, and wherein the air inlet is disposed at an end of the double bellows assembly as considered in the longitudinal direction.

6. A vehicle comprising a double bellows assembly according to any one of claims 1 to 4, wherein the two vehicle sections (1) comprise a transition (4) which is delimited on a number of sides of the transition (4) by the double bellows assembly.

7. A method for producing a double bellows assembly for a transition (4) between two vehicle sections (1) of a vehicle, which are connected to each other by means of an articulated connection, wherein an inner bellows (7) and an outer bellows (6) are provided as parts of the double bellows assembly, such that the inner bellows (7) and the outer bellows (6) comprise a gap therebetween in a direction transverse to a longitudinal direction of the transition (4), such that the transition (4), in an installed state, allows people to pass through the transition (4) in the longitudinal direction from one of the vehicle sections (1) into another of the vehicle sections,
wherein an air-guiding channel (15, 17) is arranged in the gap and comprises channel walls (23, 24, 25, 26) which delimit a flow space of the air-guiding channel (15, 17), wherein the flow space is available for flowing air, **characterised in that** an inner channel wall (24) runs along the inner bellows (7) and an outer channel wall (23) runs along the outer bellows (6),
wherein the inner channel wall (24) and the outer channel wall (23) consist of flexible material, wherein the inner channel wall (24) is fastened at fastening regions (19) at the inner bellows (7), the fastening regions are distanced from one another in the longitudinal direction of the transition (4) and the inner channel wall (24) is not fastened to the inner bellows (7) in the longitudinal direction between the fastening regions (19), and wherein the outer channel wall (23) is fastened at fastening regions (19) at the outer bellows (6), the fastening regions (19) are distanced from one another in the longitudinal direction of the transition (4), and the outer channel wall (23) is not fastened at the outer bellows (6) in the longitudinal direction between the fastening regions (19).

8. The method for producing a double bellows assembly according to the preceding claim, wherein the air-guiding channel (17) is connected to an air inlet for admitting air, and wherein the air inlet is arranged at an end of the double bellows assembly as considered in the longitudinal direction.

9. The method for producing a vehicle having a double bellows assembly, wherein the double bellows assembly according to claim 7 or 8 is produced, and wherein a transition (4) is produced between two vehicle sections (1), which are connected to each other by means of an articulated connection, and is delimited on a number of sides of the transition (4) by the double bellows assembly.

## Revendications

1. Agencement à double soufflet pour un passage (4) entre deux parties de véhicule reliées par articulation entre elles d'un véhicule, dans lequel l'agencement à double soufflet présente un soufflet intérieur (7) et un soufflet extérieur (6), qui présentent dans une direction transversale à un sens longitudinal du passage (4) un espace intermédiaire entre eux, dans lequel le passage (4) permet dans un état installé à des personnes de parvenir par le passage (4) dans le sens longitudinal d'une des parties de véhicule (1) jusque dans une autre des parties de véhicule,
dans lequel un canal de guidage d'air (15, 17) est agencé dans l'espace intermédiaire, lequel présente des parois de canal (23, 24, 25, 26) qui délimitent un espace d'écoulement du canal de guidage d'air (15, 17), l'espace d'écoulement se trouvant à disposition pour l'air circulant, **caractérisé en ce que**
une paroi de canal intérieure (24) s'étend le long du soufflet intérieur (7) et une paroi de canal (23) extérieur s'étend le long du soufflet extérieur (6),
dans lequel la paroi de canal intérieure (24) et la paroi de canal extérieure (23) se composent de matériau flexible, dans lequel la paroi de canal intérieure (24) est fixée sur des zones de fixation (19) espacées l'une de l'autre dans le sens longitudinal du passage (4) sur le soufflet intérieur (7) et la paroi de canal intérieure (24) n'est pas fixée dans le sens longitudinal entre les zones de fixation (19) sur le soufflet intérieur (7), et dans lequel la paroi de canal extérieure (23) est fixée sur des zones de fixation (19) espacées l'une de l'autre dans le sens longitudinal du passage (4) sur le soufflet extérieur (6) et la paroi de canal extérieure (23) n'est pas fixée dans le sens longitudinal entre les zones de fixation (19) sur le soufflet extérieur (6).

2. Agencement à double soufflet selon la revendication 1, dans lequel le canal de guidage d'air (15) s'étend dans l'espace intermédiaire de bas en haut.

3. Agencement à double soufflet selon la revendication 1 ou 2, dans lequel la paroi de canal intérieure (24) et/ou la paroi de canal extérieure (23) est reliée dans au moins une des zones de fixation (19) de manière détachable par un clip de fixation (34, 37) ou un vissage (33) avec le soufflet intérieur (7) ou soufflet extérieur (6) associé respectivement.

4. Agencement à double soufflet selon l'une des revendications 1 à 3, dans lequel la paroi de canal intérieure (24) et/ou la paroi de canal extérieure (23) se compose d'un matériau élastique et/ou d'un tissu.

5. Agencement de guidage d'air avec un agencement à double soufflet selon l'une des revendications précédentes, dans lequel le canal de guidage d'air (17) est relié à une entrée d'air pour l'admission d'air et dans lequel l'entrée d'air se trouve, considérée dans le sens longitudinal, sur une extrémité de l'agencement à double soufflet.

6. Véhicule avec un agencement à double soufflet selon l'une des revendications 1 à 4, dans lequel les deux parties de véhicule (1) présentent un passage (4) qui est délimité sur plusieurs côtés du passage (4) par l'agencement à double soufflet.

7. Procédé de fabrication d'un agencement à double soufflet pour un passage (4) entre deux parties de véhicule (1) reliées par articulation l'une à l'autre d'un véhicule, dans lequel comme parties de l'agencement à double soufflet, un soufflet intérieur (7) et un soufflet extérieur (6) sont mis à disposition de sorte que le soufflet intérieur (7) et le soufflet extérieur (6) présentent dans un sens transversal à un sens longitudinal du passage (4) un espace intermédiaire entre eux, de sorte que le passage (4) permette dans un état installé à des personnes de parvenir par le passage (4) dans le sens longitudinal d'une des parties de véhicule (1) jusque dans une autre des parties de véhicule,
dans lequel un canal de guidage d'air (15, 17) est agencé dans l'espace intermédiaire, lequel présente des parois de canal (23, 24, 25, 26) qui délimitent un espace d'écoulement du canal de guidage d'air (15, 17), l'espace d'écoulement se trouvant à disposition pour l'air circulant, **caractérisé en ce que**
une paroi de canal intérieure (24) s'étend le long du soufflet intérieur (7) et une paroi de canal extérieure (23) s'étend le long du soufflet extérieur (6),
dans lequel la paroi de canal intérieure (24) et la paroi de canal extérieure (23) se composent de matériau flexible, dans lequel la paroi de canal intérieure (24) est fixée sur des zones de fixation (19) espacées dans le sens longitudinal du passage (4) l'une de l'autre sur le soufflet intérieur (7) et la paroi de canal intérieure (24) n'est pas fixée dans le sens longitudinal entre les zones de fixation (19) sur le soufflet intérieur (7) et dans lequel la paroi de canal extérieure (23) est fixée sur des zones de fixation (19) espacées dans le sens longitudinal du passage (4) l'une de l'autre sur le soufflet extérieur (6) et la paroi de canal extérieure (23) n'est pas fixée dans le sens longitudinal entre les zones de fixation (19) sur le soufflet extérieur (6).

8. Procédé de fabrication d'un agencement à double soufflet selon la revendication précédente, dans lequel le canal de guidage d'air (17) est relié à une entrée d'air pour l'admission d'air, et dans lequel l'entrée d'air, considéré dans le sens longitudinal, est agencée sur une extrémité de l'agencement à double soufflet.

9. Procédé de fabrication d'un véhicule avec un agencement à double soufflet, dans lequel l'agencement à double soufflet est fabriqué selon la revendication 7 ou 8, et dans lequel un passage (4) est fabriqué entre deux parties de véhicule (1) reliées par articulation entre elles, lequel est délimité sur plusieurs côtés du passage (4) par l'agencement à double soufflet.
